Europäisches Patentamt

European Patent Office

Office européen des brevets

(19)

(11) **EP 0 626 888 B1**

(12) **EUROPÄISCHE PATENTSCHRIFT**

(45) Veröffentlichungstag und Bekanntmachung des Hinweises auf die Patenterteilung:
**14.05.1997 Patentblatt 1997/20**

(21) Anmeldenummer: **93917382.9**

(22) Anmeldetag: **03.02.1993**

(51) Int. Cl.⁶: $B05D\ 5/06$, $B05D\ 7/16$, $C09D\ 175/00$

(86) Internationale Anmeldenummer:
**PCT/EP93/00242**

(87) Internationale Veröffentlichungsnummer:
**WO 93/15849 (19.08.1993 Gazette 1993/20)**

(54) **VERFAHREN ZUR HERSTELLUNG EINER ZWEISCHICHTIGEN LACKIERUNG UND FÜR DIESES VERFAHREN GEEIGNETE NICHT-WÄSSRIGE LACKE**

PROCESS FOR PRODUCING A TWO-LAYER PAINT AND SUITABLE NON-AQUEOUS PAINTS THEREFOR

PROCEDE DE FABRICATION D'UNE PEINTURE A DEUX COUCHES ET VERNIS NON AQUEUX CONVENANT POUR CE PROCEDE

(84) Benannte Vertragsstaaten:
**AT BE CH DE DK ES FR GB IT LI NL SE**

(30) Priorität: **15.02.1992 DE 4204518**

(43) Veröffentlichungstag der Anmeldung:
**07.12.1994 Patentblatt 1994/49**

(73) Patentinhaber: **BASF Lacke + Farben AG**
**48165 Münster-Hiltrup (DE)**

(72) Erfinder:
• **RÖCKRATH, Ulrike**
**D-4370 Marl (DE)**
• **WIGGER, Georg**
**D-4400 Münster (DE)**
• **POTH, Ulrich**
**D-4400 Münster (DE)**

(56) Entgegenhaltungen:
**EP-A- 0 038 127          EP-A- 0 403 044**
**DE-B- 2 639 491          US-A- 3 639 147**

• **Orbit Search Service, File WPAT, Accession number 90-338137/ 45, KANSAI PAINT KK: "Heat-curable paint compsn. - based on hydroxy gp. contg. resin, amino resin and blocked poly:isocyanate", J02242867-A, 900927, 9045, abstract**

EP 0 626 888 B1

**Beschreibung**

Die Erfindung betrifft ein Verfahren zur Herstellung einer zweischichtigen Lackierung, bei dem

(1) ein pigmentierter Basislack auf die Substratoberfläche aufgebracht wird

(2) aus dem in Stufe (1) aufgebrachten Basislack ein Polymerfilm gebildet wird

(3) auf der so erhaltenen Basislackschicht ein nicht-wäßriger transparenter Decklack aufgebracht wird und anschließend

(4) Basislackschicht und Decklackschicht zusammen eingebrannt werden.

Die Erfindung betrifft auch für dieses Verfahren geeignete nicht-wäßrige Lacke.

Das oben beschriebene basecoat/clearcoat-Verfahren ist bekannt und wird vor allem zur Herstellung von Decklackierungen, insbesondere Metalleffektlackierungen auf Automobilkarosserien eingesetzt (vgl. z.B. US-A-3,639,147 und EP-A-38 127).

Mit dem basecoat/clearcoat-Verfahren sind Lackierungen herstellbar, die sich im Vergleich zu einschichtigen Decklackierungen durch eine verbesserte Effektgebung und durch die Möglichkeit, Lackierungen mit leuchtenden und reineren Farbtönen herzustellen, auszeichnen.

Der in Stufe (1) vorlackierte Basislack bestimmt, je nach Art, Menge und räumlicher Orientierung der eingesetzten Pigmente, den Farbton und gegebenenfalls den Effekt (z.B. Metalleffekt oder Perlglanzeffekt) der Lackierung.

In Stufe (2) des Verfahrens werden dem in Stufe (1) aufgebrachten Basislackfilm in einer Abdunstphase wenigstens ein Teil der organischen Lösemittel bzw. wenigstens ein Teil des Wassers entzogen. Auf diese vorgetrocknete, aber nicht eingebrannte Basislackschicht wird in Stufe (3) ein nicht-wäßriger transparenter Decklack aufgebracht (Naß-in-Naß-Verfahren) und in Stufe (4) werden dann Basislackschicht und Decklackschicht zusammen eingebrannt.

Der in Stufe (3) aufgebrachte transparente Decklack verleiht der Zweischichtlackierung Glanz und Fülle und schützt die in Stufe (1) aufgebrachte pigmentierte Lackschicht vor chemischen und physikalischen Angriffen.

Mit dem in Rede stehenden Verfahren können nur dann qualitativ hochwertige Zweischichtlackierungen erhalten werden, wenn der in Stufe (3) aufgebrachte transparente Decklack die in den Stufen (1) und (2) aufgebrachte Basislackschicht nicht so stört, daß es zu einer Verschlechterung des optischen Effektes (z.B. Wolkenbildung) kommt. Andererseits muß der transparente Decklack so zusammengesetzt sein, daß er nach dem in Stufe (4) durchgeführten Einbrennprozeß auf der Basislackschicht gut haftet. Weitere wichtige Eigenschaften, die die nach dem Einbrennprozeß erhaltene transparente Decklackschicht aufweisen muß, sind hohe Transparenz, guter Glanz und gute mechanische Eigenschaften, wie Härte, Kratzfestigkeit und Elastizität. Nicht zuletzt muß die nach dem Einbrennprozeß erhaltene transparente Decklackschicht eine hohe Widerstandsfähigkeit gegen klimatische Einflüsse (z.B. Temperaturschwankungen, Feuchtigkeit in Form von Wasserdampf, Regen, Tau, Belastung durch Strahlung usw....) und gegen Angriffe durch Säuren oder andere Chemikalien, wie z.B. organische Lösemittel aufweisen. Außerdem sollen die in Stufe (3) aufgebrachten transparenten Decklacke einen möglichst niedrigen Gehalt an organischen Lösemitteln und eine gute Lagerstabilität aufweisen.

In der JP-A-2-242867 wird ein basecoat/clearcoat-Verfahren beschrieben, bei dem in Stufe (3) nicht-wäßrige transparente Decklacke aufgebracht werden, die (A) ein hydroxylgruppenhaltiges Kunstharz, (B) ein Aminoplastharz und (C) ein blockiertes Polyisocyanat enthalten, wobei die Komponenten (B) und (C) so auszuwählen sind, daß die Temperatur, bei der eine chemische Reaktion zwischen (A) und (C) einsetzt, höchstens 20°C unter und höchstens 50°C über der Temperatur, bei der eine chemische Reaktion zwischen (A) und (B) einsetzt, liegen soll.

Als Blockierungsmittel zur Herstellung der Komponente (C) werden genannt: Flüchtige, niedermolekulare, aktive Wasserstoffatome aufweisende Verbindungen, wie Methanol, Ethanol, Propanol, Butanol, Hexanol, Cyclohexanol, Benzylalkohol, Ethylenglykolmonoethylether und andere aliphatische oder aromatische Monoalkohole, Dimethyl- oder Diethylaminoethanol und andere hydroxylgruppenhaltige tertiäre Amine, Acetonoxim, Methylethylketonoxim und andere Oxime, Acetylaceton, Acetessigsäureester, Malonsäureester und andere aktive Methylengruppen enthaltende Verbindungen, -Caprolactam und andere Lactame und Phenol. Als Blockierungsmittel werden vorzugsweise aliphatische Monoalkohole, Oxime und Caprolactame eingesetzt.

Die in der JP-A-2-242867 beschriebenen transparenten Decklacke liefern Lackierungen, die insbesondere hinsichtlich der Beständigkeit gegen organische Lösemittel und Säuren, Glanz, Transparenz und Resistenz gegenüber Vergilbung verbessert werden sollten.

In der DE-B-26 39 491 werden nicht-wäßrige Lacke beschrieben, die ein hydroxylgruppenhaltiges Polyester- und/oder Alkydharz, mit einem Acetessigsäurealkylester blockiertes Hexamethylendiisocyanat und/oder mit einem Acetessigsäurealkylester blockiertes 2,2,4 Trimethylhexamethylendiisocyanat und ein Aminoplastharz enthalten. Diese Lacke können auch als transparente Decklacke im Bereich der Kraftfahrzeuglackierung eingesetzt werden. Mit diesen

2

Lacken werden Lackierungen erhalten, die insbesondere bei Anwendung von erhöhten Einbrenntemperaturen und/oder verlängerten Einbrennzeiten vergilben und die insbesondere hinsichtlich der Beständigkeit gegenüber Säuren und organischen Lösemitteln sowie hinsichtlich der Kratzbeständigkeit verbessert werden sollten.

Gegenstand der vorliegenden Erfindung ist ein Verfahren der eingangs genannten Art, bei dem in Stufe (3) ein nicht-wäßriger transparenter Decklack aufgebracht wird, der

(A) ein hydroxylgruppenhaltiges Kunstharz oder eine Mischung aus hydroxylgruppenhaltigen Kunstharzen

(B) ein Aminoplastharz oder eine Mischung aus Aminoplastharzen und

(C) ein blockiertes Polyisocyanat oder eine Mischung aus blockierten Polyisocyanaten

enthält, wobei die Komponente (C) sowohl mit einem Blockierungsmittel (I) als auch mit einem Blockierungsmittel (II) blockierte Isocyanatgruppen enthält, wobei

- das Blockierungsmittel (I) ein Dialkylmalonat oder eine Mischung aus Dialkylmalonaten ist,

- das Blockierungsmittel (II) ein von (I) verschiedenes, aktive Methylengruppen enthaltendes Blockierungsmittel, ein Oxim oder eine Mischung aus diesen Blockierungsmitteln ist und

- die Komponente (C) herstellbar ist, indem mindestens 50 Prozent der Isocyanatgruppen eines Polyisocyanates oder einer Mischung aus Polyisocyanaten mit einer Mischung aus den Blockierungsmitteln (I) und (II) umgesetzt werden, wobei die Mischung aus den Blockierungsmitteln (I) und (II) die Blockierungsmittel (I) und (II) in einem Molverhältnis enthält, das zwischen 1,0 : 1,0 und 9,0 : 1,0 liegt.

Die nach dem erfindungsgemäßen Verfahren hergestellten Zweischichtlackierungen zeichnen sich durch hohe Härte, hohen Glanz, gute Haftung zwischen Basislackschicht und Decklackschicht, guten Decklackstand, gute Kratzbeständigkeit und gute Beständigkeit gegen klimatische Ein-flüsse, organische Lösemittel und Säuren sowie hohe Resistenz gegenüber Vergilbung (insbesondere gegen Vergilbung die infolge von hohen Einbrenntemperaturen und/oder infolge von langen Einbrennzeiten auftritt) aus. Diese guten Eigenschaften werden auch bei Verwendung unterschiedlicher Basislacke erhalten. Die erfindungsgemäß eingesetzten transparenten Decklacke zeichnen sich außerdem durch hohe Lagerstabilität aus und können auch mit einem niedrigen Gehalt (z.B. kleiner als 50 Gew.-%) an organischen Lösemitteln gut verarbeitet werden.

In der EP-A-403 044 werden blockierte Polyisocyanate enthaltende Lacke beschrieben, wobei jedes Polyisocyanatmolekül mit mindestens zwei verschiedenen Blockierungsmitteln blockiert ist und mindestens zwei der Blockierungsmittel einen beträchtlichen Unterschied in ihrer Deblockierungstemperatur, vorzugsweise mindestens 40°C, aufweisen. Die in der EP-A-403 044 beschriebenen Lacke enthalten kein Aminoplastharz und werden für coil-coating-Zwecke eingesetzt. Die EP-A-403 044 enthält keinerlei Hinweise auf das der vorliegenden Erfindung zugrundeliegende basecoat/clearcoat-Verfahren.

In der Stufe (I) des erfindungsgemäßen Verfahrens können im Prinzip alle zur Herstellung von zweischichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127 und DE-A-28 18 100. In diesen Patentdokumenten sind auch weitere Informationen über das in Rede stehende basecoat/clearcoat-Verfahren zu finden.

In Stufe (2) des erfindungsgemäßen Verfahrens werden dem in Stufe (1) applizierten Basislack in einer Abdunstphase die Lösemittel bzw. das Wasser entzogen. Die Basislackschicht kann auch eingebrannt werden. Das ist aber aus ökonomischen Gründen nachteilig, weil dann zur Herstellung der Zweischichtlackierung zwei anstelle von einem Einbrennvorgang benötigt werden.

Der in Stufe (3) des erfindungsgemäßen Verfahrens eingesetzte nicht-wäßrige transparente Decklack enthält

(A) ein hydroxylgruppenhaltiges Kunstharz oder eine Mischung aus hydroxylgruppenhaltigen Kunstharzen

(B) ein Aminoplastharz oder eine Mischung aus Aminoplastharzen und

(C) ein blockiertes Polyisocyanat oder eine Mischung aus blockierten Polyisocyanaten

wobei die Komponente (C) sowohl mit einem Blockierungsmittel (I) als auch mit einem Blockierungsmittel (II) blockierte Isocyanatgruppen enthält, wobei

- das Blockierungsmittel (I) ein Dialkylmalonat oder eine Mischung aus Dialkylmalonaten ist,

- das Blockierungsmittel (II) ein von (I) verschiedenes, aktive Methylengruppen enthaltendes Blockierungsmittel, ein Oxim oder eine Mischung aus diesen Blockierungsmitteln ist und

- die Komponente (C) herstellbar ist, indem mindestens 50 Prozent der Isocyanatgruppen eines Polyisocyanates oder einer Mischung aus Polyisocyanaten mit einer Mischung aus den Blockierungsmitteln (I) und (II) umgesetzt werden, wobei die Mischung aus den Blockierungsmitteln (I) und (II) die Blockierungsmittel (I) und (II) in einem Molverhältnis enthält, das zwischen 1,0 : 1,0 und 9,0 : 1,0 liegt.

Als Komponente (A) kann im Prinzip jedes für transparente Decklacke geeignete hydroxylgruppenhaltige Kunstharz oder eine Mischung aus solchen Kunstharzen eingesetzt werden. Als Komponente (A) werden vorzugsweise hydroxylgruppenhaltige Polyesterharze und/oder hydroxylgruppenhaltige Alkydharze und/oder hydroxylgruppenhaltige Polyacrylatharze sowie Mischungen aus diesen Harzen eingesetzt. Die als Komponente (A) eingesetzten Kunstharze weisen im allgemeinen Hydroxylzahlen von 40 bis 240, vorzugsweise 60 bis 150 und zahlenmittlere Molekulargewichte von 1500 bis 30000, vorzugsweise 2000 bis 15000, besonders bevorzugt 2500 bis 7500 auf.

Hydroxylgruppenhaltige Polyesterharze, Alkydharze und Polyacrylatharze sind gut bekannt. Beispiele für solche Harze und deren Herstellung werden beispielsweise in der JP-A-2-24 28 67, DE-B-26 39 491 sowie in den auf Seite 6 in den Zeilen 31 bis 36 genannten Patentdokumenten beschrieben.

Als Komponente (A) werden besonders bevorzugt Polyacrylatharze eingesetzt, die herstellbar sind, indem

(a) 10 bis 92, vorzugsweise 20 bis 60 Gew.-% eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cycloalkylrest oder Mischungen aus solchen Monomeren

(b) 8 bis 60, vorzugsweise 12,5 bis 38,5 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren

(c) 0,0 bis 5,0, vorzugsweise 0,7 bis 3,0 Gew.-% Acrylsäure oder Methacrylsäure oder Mischungen aus diesen Monomeren und

(d) 0 bis 50, vorzugsweise 0 bis 30 Gew.-% von (a), (b) und (c) verschiedene, mit (a), (b) und (c) copolymerisierbare ethylenisch ungesättigte Monomere oder Mischungen aus solchen Monomeren

zu Polyacrylatharzen mit Hydroxylzahlen von 40 bis 240, vorzugsweise 60 bis 150, Säurezahlen von 0 bis 35, vorzugsweise von 5 bis 20, Glasübergangstemperaturen von -35 bis +70°C, bevorzugt von -20 bis +40°C und zahlenmittleren Molekulargewichten von 1500 bis 30000, vorzugsweise von 2000 bis 15000, (gelpermeationschromatographisch mit Polystyrolstandard bestimmt) polymerisiert werden.

Als Beispiele für (a)-Komponenten werden genannt: Methyl-, Ethyl-, Propyl-, n-Butyl-, Isobutyl-, tert.-Butyl-, Pentyl-, Hexyl-, Heptyl- und 2-Ethylhexylacrylat bzw. -methacrylat sowie Cyclohexylacrylat und Cyclohexylmethacrylat.

Als Beispiele für (b)-Komponenten werden genannt: Hydroxyethyl-, Hydroxypropyl- und Hydroxybutylacrylat bzw. -methacrylat.

Als Beispiele für (d)-Komponenten werden genannt: Vinylaromaten, wie beispielsweise Styrol, Vinyltoluol, $\alpha$-Methylstyrol, $\alpha$-Ethylstyrol, kernsubstituierte Diethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester der 2-Methyl-2-ethylheptansäure.

Die Hydroxylzahl und die Säurezahl der Polyacrylatharze kann der Fachmann problemlos durch die Menge an eingesetzter Komponente (b) bzw. (c) steuern.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$\frac{1}{T_G} = \sum_{n=1}^{n=x} \frac{W_n}{T_{Gn}}$$

$T_G$ = Glasübergangstemperatur des Polyacrylatharzes

$x$ = Anzahl der im Polyacrylatharz einpolymerisierten verschiedenen Monomeren.

$W_n$ = Gewichtsanteil des n-ten Monomers

$T_{Gn}$ = Glasübergangstemperatur des Homopolymers aus dem n-ten Monomer

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als Komponente (A) werden auch besonders bevorzugt Polyesterharze bzw. Alkydharze eingesetzt, die herstellbar sind, indem

($\alpha$) eine cycloaliphatische oder aliphatische Polycarbonsäure oder eine Mischung aus solchen Polycarbonsäuren

($\beta$) ein aliphatisches oder cycloaliphatisches Polyol mit mehr als zwei Hydroxylgruppen im Molekül oder eine Mischung aus solchen Polyolen

( ) ein aliphatisches oder cycloaliphatisches Diol oder eine Mischung aus solchen Diolen und

($\delta$) eine aliphatische lineare oder verzweigte gesättigte Monocarbonsäure oder eine Mischung aus solchen Monocarbonsäuren

in einem molaren Verhältnis von ($\alpha$) : ($\beta$) : ( ) : ($\delta$) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden.

Als Beispiele für die Komponente ($\alpha$) werden genannt: Hexahydrophtalsäure, 1,4-Cyclohexandicarbonsäure, Endomethylentetrahydrophtalsäure, Oxalsäure, Malonsäure, Bernsteinsäure, Glutarsäure, Adipinsäure, Pimelinsäure, Korksäure, Azelainsäure und Sebacinsäure.

Als Beispiele für die Komponente ($\beta$) werden genannt: Pentaerythrit, Trimethylolpropan, Trimethylolethan und Glycerin.

Als Beispiele für die Komponente ( ) werden genannt: Ethylenglykol, Diethylenglykol, Propylenglykol, Neopentylglykol, 2-Methyl-2-propylpropandiol-1,3, 2-Ethyl-2-butylpropandiol-1,3, 2,2,4-Trimethylpentandiol-1,5, 2,2,5-Trimethylhexandiol-1,6, Hydroxypivalinsäureneopentylglykolester und Dimethylolcyclohexan.

Als Beispiele für die Komponente ($\delta$) werden genannt: 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T.C. Patton, Interscience Publishers 1962 beschrieben.

Als Komponente (B) kann im Prinzip jedes für transparente Decklacke geeignete Aminoplastharz oder eine Mischung aus solchen Aminoplastharzen eingesetzt werden.

Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind.

Als Komponente (B) werden vorzugsweise mit niedrigen Alkoholen, insbesondere mit Methanol oder Butanol veretherte Melamin-Formaldehydharze eingesetzt. Besonders bevorzugt werden mit niedrigen Alkoholen, insbesondere mit Methanol und/oder Butanol veretherte Melamin-Formaldehydharze, die im statistischen Mittel pro Triazinring noch 0,1 bis 0,25 an Stickstoffatome gebundene Wasserstoffatome enthalten, als Komponente (B) eingesetzt.

Die erfindungsgemäß eingesetzten transparenten Decklacke enthalten als Komponente (C) ein blockiertes Polyisocyanat oder eine Mischung aus blockierten Polyisocyanaten, wobei die Komponente (C) sowohl mit einem Blockierungsmittel (I) als auch mit einem Blockierungsmittel (II) blockierte Isocyanatgruppen enthält, wobei

- das Blockierungsmittel (I) ein Dialkylmalonat oder eine Mischung aus Dialkylmalonaten ist,

- das Blockierungsmittel (II) ein von (I) verschiedenes, aktive Methylengruppen enthaltendes Blockierungsmittel, ein Oxim oder eine Mischung aus diesen Blockierungsmitteln ist und

- die Komponente (C) herstellbar ist, indem mindestens 50 Prozent der Isocyanatgruppen eines Polyisocyanates oder einer Mischung aus Polyisocyanaten mit einer Mischung aus den Blockierungsmitteln (I) und (II) umgesetzt werden, wobei die Mischung aus den Blockierungsmitteln (I) und (II) die Blockierungsmittel (I) und (II) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Die Komponente (C) wird vorzugsweise wie folgt hergestellt. Ein Polyisocyanat oder eine Mischung aus Polyisocyanaten wird in an sich bekannter Art und Weise mit einer Mischung aus den Blockierungsmitteln (I) und (II) umgesetzt, wobei die Mischung aus den Blockierungsmitteln (I) und (II) die Blockierungsmittel (I) und (II) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Das Polyisocyanat bzw. die Mischung aus Polyisocyanaten kann mit der Mischung aus den Blockierungsmitteln (I) und (II) so weit umgesetzt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern. Es wurde nun überraschenderweise gefunden, daß auch dann Lacke mit den oben beschriebenen guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (I) und (II) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1,3, 2,2,4-Trimethylpentandiol-1,5 und 2,2,5-Trimethylhexandiol-1,6 oder die als Komponente (A) einsetzbaren hydroxylgruppenhaltigen Kunstharze eingesetzt.

Die Komponente (C) ist auch erhältlich, indem mit dem Blockierungsmitteln (I) bzw. (II) blockierte Polyisocyanate in einem solchen Verhältnis gemischt werden, daß eine Mischung erhalten wird, in der das Äquivalentverhältnis zwischen den mit (I) blockierten Isocyanatgruppen und den mit (II) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Diese Verfahrensweise zur Herstellung der Komponente (C) ist weniger bevorzugt.

Prinzipiell können alle auf dem Lackgebiet einsetzbaren Polyisocyanate zur Herstellung der Komponente (C) eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat und 1,3-Bis-(2-isocyanatopropyl-2-)benzol (TMXDI) sowie Addukte dieser Polyisocyanate an Polyole, insbesondere niedermolekulare Polyole, wie z.B. Trimethylolpropan und von diesen Polyisocyanaten abgeleitete isocyanuratgruppen- und/oder biuretgruppenhaltige Polyisocyanate.

Als Polyisocyanate werden besonders bevorzugt Hexamethylendiisocyanat und Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Äquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blockierungsmittel (I) werden Dialkylmalonate oder eine Mischung aus Dialkylmalonaten eingesetzt.

Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylester, wobei Malonsäurediethylester bevorzugt eingesetzt wird.

Als Blockierungsmittel (II) werden von (I) verschiedene, aktive Methylengruppen enthaltende Blockierungsmittel und Oxime sowie Mischungen aus diesen Blockierungsmitteln eingesetzt.

Als Beispiele für Blockierungsmittel, die als Blockierungsmittel (II) einsetzbar sind, werden genannt: Acetessigsäuremethyl-, ethyl-, -propyl-, butyl-, -pentyl-, hexyl-, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsmittel (II) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (II) eingesetzt.

Die Komponenten (A), (B) und (C) werden in den erfindungsgemäß eingesetzten transparenten Decklacken im allgemeinen in solchen Mengen eingesetzt, daß die Komponente (A) in einer Menge von 50 bis 90, vorzugsweise 60 bis 75 Gew.-%, die Komponente (B) in einer Menge von 5 bis 45, vorzugsweise 10 bis 25 Gew.-% und die Komponente (C) in einer Menge von 5 bis 45, vorzugsweise 10 bis 25 Gew.-% vorhanden ist, wobei die Gewichtsprozentangaben auf (A) + (B) + (C) = 100 Gew.-% bezogen sind.

Die erfindungsgemäß eingesetzten transparenten Decklacke enthalten keine bzw. nur transparente Pigmente. Als organische Lösemittel enthalten die Decklacke übliche zur Herstellung von Lacken gebräuchliche organische Lösemittel. Die Decklacke können außerdem noch weitere gebräuchliche Zusätze, wie z.B. Lichtschutzmittel, Verlaufshilfsmittel usw. enthalten.

Die mit den erfindungsgemäß eingesetzten Decklacken hergestellten Zweischichtlackierungen weisen die vorteilhaften Eigenschaften insbesondere auch dann auf, wenn sie unter den zur Zeit bei der Automobilserienlackierung angewandten Einbrennbedingungen (30 Minuten bei 130°C oder 20 Minuten bei 140°C) eingebrannt worden sind.

Die Erfindung wird in den folgenden Beispielen näher erläutert. Alle Mengen- und Prozentangaben sind, wenn nicht ausdrücklich etwas anderes festgestellt wird, als Gewichtsangaben zu verstehen.

Herstellung der Komponente (A)

Beispiel 1

Herstellung eines hydroxylgruppenhaltigen Polyacrylatharzes (Acrylatharz 1)

In einen Doppelwand-Labor-Edelstahl-Reaktor mit einem Nutzvolumen von 4 l, mit einem Bodenventil, ausgestattet mit einer regelbaren Heizung durch ein Ölumlaufthermostat, einem Blattrührer mit Rührverschluß - angetrieben von einem Elektromotor mit 230 W Leistungsaufnahme, einem Thermometer zur Kontrolle der Temperatur des Reaktionsguts, einem Einleitrohr für einen Stickstoffschutzgasstrom, je einem Dosiergefäß für eine Monomerenmischung und eine Initiatorlösung und einem Rückflußkühler werden 1140 g Polymerisationslösemittel aus einer Fraktion aromatischer Kohlenwasserstoffe mit einem Siedebereich von 158°C bis 172°C bei Normaldruck eingewogen. Das Lösemittel wird auf 150°C aufgeheizt. Dann werden aus dem Dosiergefäß für die Monomerenmischung eine Mischung aus 562 g tert.-Butylacrylat, 182 g n-Butylmethacrylat, 364 g 2-Hydroxypropylmethacrylat, 73 g 4-Hydroxibutylacrylat, 33 g Acrylsäure und aus dem Dosiergefäß für die Initiatorlösung eine Lösung von 73 g tert.-Butylperbenzoat in 73 g des oben beschriebenen aromatischen Lösemittels gleichzeitig zudosiert. Die Monomerenmischung wird über einen Zeitraum von 4 Stunden, die Initiatorlösung über einen Zeitraum von 4,5 Stunden gleichmäßig in den Reaktor dosiert. Die Temperatur wird dabei auf 150°C gehalten. Nach Beendigung der Iniatorzugabe wird das Reaktionsgut für eine weitere Stunde auf 150°C gehalten, dann wird der Grad des Umsatzes durch mehrfache Bestimmung des nichtflüchtigen Anteils der Reaktionsmischung (in einem Umluftofen 15 min. bei 180°C) bestimmt. Wenn der Umsatz vollständig ist werden bei 110°C 526 g des Polymerisationslösemittels unter Vakuum bei 150 bis 190 hPa abdestilliert. Dann wird mit 101 g 1-Methoxypropylacetat-2 verdünnt und mit dem genannten aromatischen Lösemittel auf einen nichtflüchtigen Anteil von ca. 60 Gew.-% eingestellt. Die resultierende Polymerlösung hat einen nichtflüchtigen Anteil (gemessen in einem Umluftofen 60 min. bei 130°C) von 59,5 %. Das Polymer hat eine Säurezahl von 23,6 und eine OH-Zahl von 139 und eine Lösungsviskosität von 390 mPa • s, gemessen an der beschriebenen Lösung in einem ICI-Platte-Kegel-Viskosimeter bei 23°C.

Beispiel 2

Herstellung eines hydroxylgruppenhaltigen Polyacrylatharzes (Acrylatharz 2)

Es wird verfahren wie im Beispiel 1. In die dort beschriebene Apparatur werden 1033 g des im Beispiel 1 beschriebenen aromatischen Lösemittels eingewogen und auf 140°C erhitzt. In das Dosiergefäß für die Monomeren wird eine Mischung aus 131 g eines handelsüblichen Gemisches von Estern der Isomere des Tridecylalkohols mit Methacrylsäure, 269 g n-Butylacrylat, 197 g n-Butylmethacrylat, 393 g Styrol, 131 g 2-Hydroxyethylmethacrylat, 157 g 2-Hydroxypropylmethacrylat und 33 g Acrylsäure eingewogen. In das Dosiergefäß für die Initiatorlösung wird eine Lösung aus 79 g Di-tert.-butylperoxid in 79 g des genannten aromatischen Lösemittels eingewogen. Der Inhalt des Dosiergefäßes für Monomere wird innerhalb von 4 Stunden, der Inhalt des Dosiergefäßes für die Initiatorlösung wird innerhalb von 4,75 Stunden gleichmäßig in das Polymerisationslösemittel dosiert. Die Dosierung der Initiatorlösung wird 15 Minuten vor der Dosierung der Monomermischung gestartet. Die Temperatur wird dabei auf 140°C gehalten. Nach Beendigung der Initiatorzugabe wird das Reaktionsgut für eine weitere Stunde auf 140°C gehalten, dann wird der Grad des Umsatzes durch mehrfache Bestimmung des nichtflüchtigen Anteils der Reaktionsmischung (in einem Umluftofen 15 min. bei 180°C) bestimmt. Wenn der Umsatz vollständig ist wird abgekühlt und mit dem beschriebenen aromatischen Lösemittel auf einen nichtflüchtigen Anteil von ca. 55 Gew.-% eingestellt. Die resultierende Polymerlösung hat einen nichtflüchtigen Anteil (gemessen in einem Umluftofen 60 min. bei 130°C) von 55,4 %. Das Polymer hat eine Säurezahl von 22,8 und eine OH-Zahl von 89 und eine Lösungsviskosität von 660 mPa • s, gemessen an der beschriebenen Lösung in einem ICI-Platte-Kegel-Viskosimeter bei 23°C.

Beispiel 3

Herstellung eines hydroxylgruppenhaltigen Alkydharzes

In die im Beispiel 1 beschriebene Apparatur, allerdings ohne Dosiergefäße und Rückflußkühler, dafür mit Wasserabscheider und Rückflußkühler ausgestattet, werden 1142 g Hexahydrophthalsäureanhydrid, 1024 g 1,1,1-Trimethylolpropan, 527 g Isononansäure als Isomerengemisch von 3,3,5-Trimethylhexansäure und 3,5,5 Trimethylhexansäure und 100 g Xylol als Schleppmittel eingewogen. Der Wasserabscheider wird mit Xylol gefüllt. Der Inhalt der Apparatur wird innerhalb von 8 Stunden auf 210°C so aufgeheizt, daß ein gleichmäßiger Rückfluß des Schleppmittels entsteht. Das Reaktionsgemisch wird auf 210°C gehalten, bis eine Säurezahl von 18,6 und eine Viskosität von 940 mPa・s, gemessen an einer Probe einer 60 %-igen Lösung des Reaktionsgemisches in dem im Beispiel 1 beschriebenen aromatischen Lösemittel, erreicht ist. Dann wird auf 160°C abgekühlt und der Inhalt der Apparatur wird mit 1000 g des genannten aromatischen Lösemittels unter Rühren gelöst und dann aus der Apparatur abgelassen. Dann wird die Lösung mit so viel des aromatischen Lösemittels verdünnt, daß ein nichtflüchtiger Anteil von 60,5 % (gemessen in einem Umluftofen 60 min. bei 130°C) resultiert. Das auf diese Weise hergestellte Alkydharz hat eine Säurezahl von 17,1, eine OH-Zahl von 123 bezogen auf den nichtflüchtigen Anteil und eine Viskosität von 1200 mPa・s in der beschriebenen Lösung, gemessen in einem ICI-Platte-Kegel-Viskosimeter bei 23°C.

Herstellung der Komponente (C)

Beispiel 4

Blockiertes Polyisocyanat 1 (Komponente (C))

In die im Beispiel 1 beschriebene Apparatur, ausgestattet mit einem Dosiergefäß und einem Rückflußkühler werden 504,0 g eines handelsüblichen Isocyanurattrimeren des Hexamethylendiisocyanats und 257,2 g des im Beispiel 1 beschriebenen aromatischen Lösemittels eingewogen. Die Lösung wird auf 50°C erwärmt. Dann wird aus dem Dosiergefäß eine Mischung aus 348,0 g Diethylmalonat, 104,0 g Acetessigsäureethylester und 2,5 g einer 50 %-igen Lösung von Natrium-p-dodecylphenolat in Xylol in einem Zeitraum von 2 Stunden so in die Lösung dosiert, daß die Temperatur 70°C nicht überschreitet.

Es wird dann langsam auf 90°C erhitzt und diese Temperatur für 6 Stunden gehalten. Dann werden weitere 2,5 g Natrium-p-dodecylphenolatlösung zugegeben und es wird so lange bei 90°C gehalten, bis der Gehalt an NCO-Gruppen im Reaktionsgemisch 0,48 % erreicht hat. Dann werden 35,1 g n-Butanol zugegeben. Die erhaltene Lösung hat einen nichtflüchtigen Anteil von 59,6 % (gemessen in einem Umluftofen 60 min. bei 130°C) und eine Viskosität von 590 mPa・s, gemessen in einem ICI-Platte-Kegel-Viskosimeter bei 23°C.

Beispiel 5

Blockiertes Polyisocyanat 2 (Komponente (C))

Es wird so verfahren wie im Beispiel 4. In die Apparatur werden 722,0 g eines handelsüblichen Isocyanurattrimeren des Hexamethylendiisocyanats und 460,0 g des im Beispiel 1 beschriebenen aromatischen Lösemittels eingewogen. In das Dosiergefäß wird eine Mischung aus 527,0 g Diethylmalonat, 130,4 g Acetessigsäureethylester und 4,5 g einer 50 %-igen Lösung von Natrium-p-dodecylphenolat in Xylol eingewogen und wie beschrieben zudosiert und umgesetzt. Es wird eine Temperatur von 90°C gehalten bis ein Gehalt an NCO-Gruppen im Reaktionsgemisch von 0,92 % erreicht ist. Dann werden 20,3 g 1,4-Dimethylolcyclohexan zugegeben und weiter bei 90°C gehalten bis der Gehalt an NCO-Gruppen im Reaktionsgemisch 0,28 % erreicht hat. Dann wird abgekühlt und 140 g n-Butanol zugegeben. Die erhaltene Lösung hat einen nichtflüchtigen Anteil von 56,8 % (gemessen in einem Umluftofen 60 min. bei 130°C) und eine Viskosität von 405 mPa・s, gemessen in einem ICI-Platte-Kegel-Viskosimeter bei 23°C.

Herstellung erfindungsgemäßer transparenter Decklacke

Die transparenten Decklacke werden hergestellt, indem man die Komponenten (A), (B) und (C) in der in Tabelle 1 genannten Reihenfolge einwiegt und durch Rühren mit einem Laborturbinenrührer gut mischt, dann Butylglykol bzw. die erste Menge Xylol zugibt und ebenfalls gut einrührt. Der UV-Absorber und der Radikalfänger werden mit (der zweiten Menge) Xylol separat vorgemischt bis sie vollständig gelöst sind und dann dem ersten Teil der Formulierung zugefügt und ebenfalls gut eingerührt. Dann werden n-Butanol und das Verlaufsmittel zugegeben und gut eingemischt. Die erhaltenen Lacke werden gegebenenfalls für die Applikation mit Xylol auf eine Viskosität von 23 sec, gemessen im DIN-4 Becher bei 20°C, eingestellt.

Tabelle 1

| Beispiel | 6 | 7 | 8 |
|---|---|---|---|
| Acrylatharz 1 | - | 53,8 | - |
| Acrylatharz 2 | 72,7 | - | - |
| Alkydharz gemäß Beispiel 3 | - | - | 66,7 |
| Melaminharz[1] | 14,1 | 11,5 | 14,1 |
| Blockiertes Polyisocyanat 1 | 6,8 | - | - |
| Blockiertes Polyisocyanat 2 | - | 13,2 | 6,8 |
| Butylglykol | 4,7 | - | 2,7 |
| Xylol | - | 8,0 | - |
| UV-Absorber[2] | 1,1 | 1,7 | 1,1 |
| Radikalfänger[3] | 1,1 | 1,5 | 1,1 |
| Xylol | 3,0 | 5,3 | 3,5 |
| n-Butanol | 4,0 | 5,0 | 2,0 |
| Verlaufsmittel[4] | 2,0 | 2,0 | 2,0 |
| | Einwaagen in g | | |

[1] Handelsübliches Melaminharz, hoch mit n-Butanol ver-ethert mit restlichen Imminogruppen
[2] Handelsüblicher UV-Absorber basierend auf einem substituierten Benztriazol
[3] Handelsüblicher Radikalfänger basierend auf einem 1,4,6-substituierten Piperidin
[4] 5 %-ige Lösung eines mit Polyether substituierten Polydimethylsiloxans in Xylol

## Herstellung von Zweischichtlackierungen des basecoat/-clearcoat-Typs

### Beispiel 9

Auf Stahltafeln, die mit einem handelsüblichen kationisch abgeschiedenen Elektrotauchlack und einem handelsüblichen lösemittelhaltigen Füller auf Basis Polyester und Melaminharz beschichtet sind, wird ein handelsüblicher Wasserbasislack, wie er beschrieben ist in der EP-A-089 497, so in zwei Spritzgängen mit 1 Minute Zwischenablüftzeit aufgebracht, daß eine Trockenfilmdicke von 14 µm resultiert. Dann wird 10 Minuten bei Raumtemperatur und 5 Minuten bei 80°C abgelüftet und dann in zwei Spritzgängen der erfindungsgemäße Lack gemäß Beispiel 6 so aufgebracht, daß eine Trockenfilmdicke von 43 µm resultiert. Die Tafel wird 5 Minuten bei Raumtemperatur abgelüftet und dann 20 Minuten bei 140°C eingebrannt.

### Beispiel 10

Es wird wie in Beispiel 9 beschrieben verfahren. Nach der Applikation des Basislacks wird der erfindungsgemäße Lack gemäß Beispiel 7 in zwei Spritzgängen so aufgebracht, daß eine Trockenfilmdicke von 45 µm resultiert. Die Tafel wird 5 Minuten bei Raumtemperatur abgelüftet und dann 20 Minuten bei 140°C eingebrannt.

### Beispiel 11

Es wird wie in Beispiel 9 beschrieben verfahren. Nach der Applikation des Basislacks wird der erfindungsgemäße Lack gemäß Beispiel 8 in zwei Spritzgängen so aufgebracht, daß eine Trockenfilmdicke von 44 µm resultiert. Die Tafel wird 5 Minuten bei Raumtemperatur abgelüftet und dann 20 Minuten bei 140°C eingebrannt.

<u>Prüfung der Zweischichtlackierungen</u>

Die Prüfergebnisse können Tabelle 2 entnommen werden.

Tabelle 2

| Lackierung gemäß Beispiel | 9 | 10 | 11 |
|---|---|---|---|
| Härte | | | |
| Fisher-scope ( $N/mm^2$ ) | - | 142 | - |
| Pendeldämpfung ( König ) | 110 | - | 113 |
| Glanz ( Gardner, 20° ) | 88 | 85 | 87 |
| Säurebeständigkeit | | | |
| $2^h$ 36 %-ige Schwefelsäure* | - | 0 | - |
| $4^h$ 36 %-ige Schwefelsäure* | - | 1 | - |
| $6^h$ 36 %-ige Schwefelsäure* | - | 1 | - |
| Gradientenofen 1 %-ige Schwefelsäure** | $44/51 \approx 0$ | - | $44/47 \approx 1$ |
| Gitterschnitt ( Gt 1 )* | 0 | 0 - 1 | 0 |
| Farbtonvergleich nach Klima-Konstanttest ( $240^h$ )* | 0 - 1 | 0 - 1 | 0 |
| Vergilbung ( 30 min. 160°C )* | 0 | 0 | 0 - 1 |

\* Noten: 0 bis 5, 0 keine Beschädigung, 5 starke Beschädigung
\*\* Test nach LPV 5500 der Mercedes Benz Werke

**Patentansprüche**

1. Verfahren zur Herstellung einer zweischichtigen Lackierung, bei dem

(1) ein pigmentierter Basislack auf die Substratoberfläche aufgebracht wird

(2) aus dem in Stufe (1) aufgebrachten Basislack ein Polymerfilm gebildet wird

(3) auf der so erhaltenen Basislackschicht ein nicht-wäßriger transparenter Decklack aufgebracht wird, der

(A) ein hydroxylgruppenhaltiges Kunstharz oder eine Mischung aus hydroxylgruppenhaltigen Kunstharzen

(B) ein Aminoplastharz oder eine Mischung aus Aminoplastharzen und

(C) ein blockiertes Polyisocyanat oder eine Mischung aus blockierten Polyisocyanaten

enthält und anschließend

(4) Basislackschicht und Decklackschicht zusammen eingebrannt werden,

dadurch gekennzeichnet, daß in Stufe (3) ein transparenter Decklack eingesetzt wird, dessen Komponente (C) sowohl mit einem Blockierungsmittel (I) als auch mit einem Blockierungsmittel (II) blockierte Isocyanatgruppen enthält, wobei

- das Blockierungsmittel (I) ein Dialkylmalonat oder eine Mischung aus Dialkylmalonaten ist,

- das Blockierungsmittel (II) ein von (I) verschiedenes, aktive Methylengruppen enthaltendes Blockierungsmittel, ein Oxim oder eine Mischung aus diesen Blockierungsmitteln ist und

EP 0 626 888 B1

-   die Komponente (C) herstellbar ist, indem mindestens 50 Prozent der Isocyanatgruppen eines Polyisocyanates oder einer Mischung aus Polyisocyanaten mit einer Mischung aus den Blockierungsmitteln (I) und (II) umgesetzt werden, wobei die Mischung aus den Blockierungsmitteln (I) und (II) die Blockierungsmittel (I) und (II) in einem Molverhältnis enthält, das zwischen 1,0 : 1,0 und 9,0 : 1,0 liegt.

2.  Nichtwäßrige Lacke, enthaltend

    (A) ein hydroxylgruppenhaltiges Kunstharz oder eine Mischung aus hydroxylgruppenhaltigen Kunstharzen

    (B) ein Aminoplastharz oder eine Mischung aus Aminoplastharzen und

    (C) ein blockiertes Polyisocyanat oder eine Mischung aus blockierten Polyisocyanaten

    dadurch gekennzeichnet, daß die Komponente (C) sowohl mit einem Blockierungsmittel (I) als auch mit einem Blockierungsmittel (II) blockierte Isocyanatgruppen enthält, wobei

    -   das Blockierungsmittel (I) ein Dialkylmalonat oder eine Mischung aus Dialkylmalonaten ist,

    -   das Blockierungsmittel (II) ein von (I) verschiedenes, aktive Methylengruppen enthaltendes Blockierungsmittel, ein Oxim oder eine Mischung aus diesen Blockierungsmitteln ist und

    -   die Komponente (C) herstellbar ist, indem mindestens 50 Prozent der Isocyanatgruppen eines Polyisocyanates oder einer Mischung aus Polyisocyanaten mit einer Mischung aus den Blockierungsmitteln (I) und (II) umgesetzt werden, wobei die Mischung aus den Blockierungsmitteln (I) und (II) die Blockierungsmittel (I) und (II) in einem Molverhältnis enthält, das zwischen 1,0 : 1,0 und 9,0 : 1,0 liegt.

3.  Verfahren oder Lacke nach Anspruch 1 oder 2, dadurch gekennzeichnet, daß die Komponente (A) eine Hydroxylzahl von 40 bis 240, vorzugsweise 60 bis 150 aufweist und in einer Menge von 50 bis 90, vorzugsweise 60 bis 75 Gew.-% vorhanden ist und die Komponente (B) in einer Menge von 5 bis 45, bevorzugt 10 bis 25 Gew.-% vorhanden ist und die Komponente (C) in einer Menge von 5 bis 45, bevorzugt 10 bis 25 Gew.-% vorhanden ist, wobei die Gewichtsprozentangaben auf (A) + (B) + (C) = 100 Gew.-% bezogen sind.

4.  Verfahren oder Lacke nach einem der Ansprüche 1 bis 3, dadurch gekennzeichnet, daß die in der Komponente (C) enthaltenen blockierten Isocyanatgruppen an aliphatische oder cycloaliphatische Reste gebunden sind.

5.  Verfahren oder Lacke nach einem der Ansprüche 1 bis 4, dadurch gekennzeichnet, daß die Komponente (C) aus blockiertem Hexamethylendiisocyanat, blockiertem Isophorondiisocyanat oder einer Mischung aus blockiertem Hexamethylendiisocyanat und blockiertem Isophorondiisocyanat besteht.

6.  Verfahren oder Lacke nach einem der Ansprüche 1 bis 5, dadurch gekennzeichnet, daß das Blockierungsmittel (I) Diethylmalonat ist.

7.  Verfahren oder Lacke nach einem der Ansprüche 1 bis 6, dadurch gekennzeichnet, daß das von (I) verschiedene, aktive Methylengruppen enthaltende Blockierungsmittel ein Acetessigsäurealkylester mit 1 bis 6 Kohlenstoffatomen im Alkylrest oder eine Mischung aus solchen Acetessigsäurealkylestern, vorzugsweise Acetessigsäureethylester ist.

8.  Verfahren oder Lacke nach einem der Ansprüche 1 bis 7, dadurch gekennzeichnet, daß das Blockierungsmittel (II) Methylethylketoxim ist.

9.  Verfahren oder Lacke nach einem der Ansprüche 1 bis 8, dadurch gekennzeichnet, daß die Komponente (C) herstellbar ist, indem mindestens 50 Prozent der Isocyanatgruppen eines Polyisocyanates oder einer Mischung aus Polyisocyanaten mit einer Mischung aus den Blockierungsmitteln (I) und (II) umgesetzt werden, wobei die Mischung aus den Blockierungsmitteln (I) und (II) die Blockierungsmittel (I) und (II) in einem Molverhältnis enthält, das zwischen 8,0 : 2,0 und 6,0 : 4,0, vorzugsweise zwischen 7,5 : 2,5 und 6,5 : 3,5 liegt.

10. Verwendung der Lacke gemäß Anspruch 2 bis 9 als transparente Decklacke in einem Verfahren zur Herstellung einer zweischichtigen Lackierung, bei dem

11

(1) ein pigmentierter Basislack auf die Substratoberfläche aufgebracht wird

(2) aus dem in Stufe (1) aufgebrachten Basislack ein Polymerfilm gebildet wird

(3) auf der so erhaltenen Basislackschicht ein nicht-wäßriger transparenter Decklack aufgebracht wird und anschließend

(4) Basislackschicht und Decklackschicht zusammen eingebrannt werden.

**Claims**

1. Process for the production of a two-coat finish, in which

   (1) a pigmented basecoat is applied to the substrate surface,
   (2) a polymer film is formed from the basecoat applied in step (1),
   (3) a non-aqueous transparent topcoat is applied to the resulting basecoat layer, which topcoat comprises

      (A) a synthetic resin containing hydroxyl groups or a mixture of synthetic resins containing hydroxyl groups,
      (B) an amino resin or a mixture of amino resins, and
      (C) a blocked polyisocyanate or a mixture of blocked polyisocyanates and subsequently

   (4) basecoat layer and topcoat layer are baked together,

   characterized in that, in step (3), a transparent topcoat is employed in which component (C) comprises isocyanate groups blocked both with a blocking agent (I) and with a blocking agent (II),

   - the blocking agent (I) being a dialkyl malonate or a mixture of dialkyl malonates,
   - the blocking agent (II) being a blocking agent which is different from (I) and contains active methylene groups, an oxime or a mixture of these blocking agents, and
   - component (C) being preparable by reacting at least 50 per cent of the isocyanate groups of a polyisocyanate or of a mixture of polyisocyanates with a mixture of the blocking agents (I) and (II), the mixture of the blocking agents (I) and (II) containing the blocking agents (I) and (II) in a molar ration which is between 1.0:1.0 and 9.0:1.0.

2. Non-aqueous coatings comprising

   (A) a synthetic resin containing hydroxyl groups or a mixture of synthetic resins containing hydroxyl groups,
   (B) an amino resin or a mixture of amino resins, and
   (C) a blocked polyisocyanate or a mixture of blocked polyisocyanates

   characterized in that component (C) comprises isocyanate groups blocked both with a blocking agent (I) and with a blocking agent (II),

   - the blocking agent (I) being a dialkyl malonate or a mixture of dialkyl malonates,
   - the blocking agent (II) being a blocking agent which is different from (I) and contains active methylene groups, an oxime or a mixture of these blocking agents, and
   - component (C) being preparable by reacting at least 50 per cent of the isocyanate groups of a polyisocyanate or of a mixture of polyisocyanates with a mixture of the blocking agents (I) and (II), the mixture of the blocking agents (I) and (II) containing the blocking agents (I) and (II) in a molar ration which is between 1.0:1.0 and 9.0:1.0.

3. Process or coatings according to Claim 1 or 2, characterized in that component (A) has a hydroxyl number of from 40 to 240, preferably 60 to 150, and is present in an amount of from 50 to 90, preferably 60 to 75, % by weight, and component (B) is present in an amount of from 5 to 45, preferably 10 to 25, % by weight, and component (C) is present in an amount of from 5 to 45, preferably 10 to 25, % by weight, the per centages by weight being based on (A) + (B) + (C) = 100% by weight.

4. Process or coatings according to one of Claims 1 to 3, characterized in that the blocked isocyanate groups contained in component (C) are attached to aliphatic or cycloaliphatic radicals.

5. Process or coatings according to one of Claims 1 to 4, characterized in that component (C) comprises blocked hexamethylene diisocyanate, blocked isophorone diisocyanate or a mixture of blocked hexamethylene diisocyanate and blocked isophorone diisocyanate.

6. Process or coatings according to one of Claims 1 to 5, characterized in that the blocking agent (I) is diethyl malonate.

7. Process or coatings according to one of Claims 1 to 6, characterized in that the blocking agent which is different from (I) and contains active methylene groups is an alkyl acetoacetate having 1 to 6 carbon atoms in the alkyl moiety or a mixture of such alkyl acetoacetates, preferably ethyl acetoacetate.

8. Process or coatings according to one of Claims 1 to 7, characterized in that the blocking agent (II) is methyl ethyl ketoxime.

9. Process or coatings according to one of Claims 1 to 8, characterized in that component (C) can be prepared by reacting at least 50 per cent of the isocyanate groups of a polyisocyanate or of a mixture of polyisocyanates with a mixture of the blocking agents (I) and (II), the mixture of the blocking agents (I) and (II) comprising the blocking agents (I) and (II) in a molar ratio which is between 8.0:2.0 and 6.0:4.0, preferably between 7.5:2.5 and 6.5:3.5.

10. Use of the coatings according to Claim 2 to 9 as transparent topcoats in a process for the production of a two-coat finish, in which

    (1) a pigmented basecoat is applied to the substrate surface,
    (2) a polymer film is formed from the basecoat applied in step (1),
    (3) a non-aqueous transparent topcoat is applied to the resulting basecoat layer, and subsequently
    (4) basecoat layer and topcoat layer are baked together.

**Revendications**

1. Procédé de fabrication d'un laguage à deux couches, lors duquel

    (1) l'on procède à l'application de la laque de base pigmentée sur la surface de substrat,
    (2) l'on forme, à partir de la laque de base appliquée dans l'étape (1), un film de polymère
    (3) l'on procède à l'application, sur la couche de laque de base ainsi obtenue, d'une laque de finition transparente non aqueuse, qui contient

        (A) une résine synthétique contenant des groupements hydroxyles ou un mélange de résines synthétiques contenant des groupements hydroxyles,
        (B) une résine aminoplaste ou un mélange de résines aminoplastes et
        (C) un polyisocyanate bloqué ou un mélange de polyisocyanates bloqués et

    (4) l'on procède ensuite à la cuisson conjointe de la couche de laque de base et de la couche de laque de finition,

caractérisé en ce que l'on utilise, dans l'étape (3), une laque de finition transparente, dont le composant (C) contient des groupements isocyanate bloqués non seulement avec un agent de blocage (I), mais aussi avec un agent de blocage (II),

- l'agent de blocage (I) étant un malonate de dialkyle ou un mélange de malonates de dialkyle,
- l'agent de blocage (II) étant un agent de blocage différent de (I), contenant des groupements méthylène actifs, une oxime ou un mélange de ces agents de blocage et
- le composant (C) pouvant être préparé en faisant réagir au moins 50 pour cent des groupements isocyanates d'un polyisocyanate ou un mélange de polyisocyanates avec un mélange des agents de blocage (I) et (II), le mélange des agents de blocage (I) et (II) contenant les agents de blocage (I) et (II) dans un rapport molaire qui se situe entre 1,0 : 1,0 et 9,0 : 1,0.

2. Laques non aqueuses, contenant

(A) une résine synthétique contenant des groupements hydroxyles ou un mélange de résines synthétiques contenant des groupements hydroxyles,

(B) une résine aminoplaste ou un mélange de résines aminoplastes et

(C) un polyisocyanate bloqué ou un mélange de polyisocyanates bloqués

caractérisées en ce que le composant (C) contient des groupements isocyanates bloqués non seulement avec un agent de blocage (I), mais aussi avec un agent de blocage (II),

- l'agent de blocage (I) étant un malonate de dialkyle ou un mélange de malonates de dialkyle,
- l'agent de blocage (II) étant un agent de blocage différent de (I), contenant des groupements méthylène actifs, une oxime ou un mélange de ces agents de blocage et
- le composant (C) pouvant être préparé en faisant réagir au moins 50 pour cent des groupements isocyanates d'un polyisocyanate ou un mélange de polyisocyanates avec un mélange des agents de blocage (I) et (II), le mélange des agents de blocage (I) et (II) contenant les agents de blocage (I) et (II) dans un rapport molaire qui se situe entre 1,0 : 1,0 et 9,0 : 1,0.

3. Procédé ou laques selon la revendication 1 ou 2, caractérisé(es) en ce que le composant (A) présente un indice hydroxyle de 40 à 240, de préférence de 60 à 150, et est présent dans une quantité de 50 à 90, de préférence de 60 à 75 % en poids, et en ce que le composant (B) est présent dans une quantité de 5 à 45, de préférence de 10 à 25 % en poids, et en ce que le composant (C) est présent dans une quantité de 5 à 45, de préférence de 10 à 25 % en poids, les indications de pourcentage en poids se rapportant à (A) + (B) + (C) = 100 % en poids.

4. Procédé ou laques selon l'une quelconque des revendications 1 à 3, caractérisé(es) en ce que les groupements isocyanates bloqués contenus dans le composant (C) sont liés à des résidus aliphatiques ou cycloaliphatiques.

5. Procédé ou laques selon l'une quelconque des revendications 1 à 4, caractérisé(es) en ce que le composant (C) se compose de diisocyanate d'hexaméthylène bloqué, de diisocyanate d'isophorone bloqué ou d'un mélange de diisocyanate d'hexaméthylène bloqué et de diisocyanate d'isophorone bloqué.

6. Procédé ou laques selon l'une quelconque des revendications 1 à 5, caractérisé(es) en ce que l'agent de blocage (I) est le malonate de diéthyle.

7. Procédé ou laques selon l'une quelconque des revendications 1 à 6, caractérisé(es) en ce que l'agent de blocage différent de (I), contenant des groupements méthylène actifs est un ester alkyle d'acide acétoacétique ayant de 1 à 6 atomes de carbone dans le résidu alkyle ou un mélange d'esters alkyles d'acide acétoacétique de ce genre, de préférence d'ester éthylique de l'acide acétoacétique.

8. Procédé ou laques selon l'une quelconque des revendications 1 à 7, caractérisé(es) en ce que l'agent de blocage (II) est la méthyléthylcétoxime.

9. Procédé ou laques selon l'une quelconque des revendications 1 à 8, caractérisé(es) en ce que l'on peut préparer le composant (C) en faisant réagir au moins 50 pour cent des groupements isocyanates d'un polyisocyanate ou d'un mélange de polyisocyanates avec un mélange des agents de blocage (I) et (II), le mélange des agents de blocage(I) et (II) contenant les agents de blocage (I) et (II) dans un rapport molaire qui se situe entre 8,0 : 2,0 et 6,0 : 4,0, de préférence entre 7,5 : 2,5 et 6,5 : 3,5.

10. Utilisation des laques selon la revendication 2 à 9 en tant que laques de finition dans un procédé de fabrication d'un laquage à deux couches, lors duquel

(1) l'on procède à l'application de la laque de base pigmentée sur la surface de substrat,
(2) l'on forme, à partir de la laque de base appliquée dans l'étape (1), un film de polymère
(3) l'on procède à l'application, sur la couche de laque de base ainsi obtenue, d'une laque de finition transparente non aqueuse, et
(4) l'on procède ensuite à la cuisson conjointe de la couche de laque de base et de la couche de laque de finition.